# EUROPEAN PATENT APPLICATION

(11) **EP 3 062 124 A1**
(43) Date of publication of application: **31.08.2016**
(21) Application number: 16157751.5
(22) Date of filing: 26.02.2016
(51) Int. Cl.: G01S 5/02, G01S 13/74

(54) **DETERMINING A POSITION OF AN AGENT**

(30) Priority: 27.02.2015 GB 201503436
(71) Applicant: Guidance Automation Limited, Leicestershire LE19 1WY (GB)
(72) Inventor: Miles, Russell William James, Leicester, Leicestershire LE19 1WY (GB); Davies, Martin Raymond, Leicester, Leicestershire LE19 1WY (GB)
(74) Representative: McWilliams, David John

(57) **Abstract**

A position of an agent (120) is determined by providing at least one vehicle (140), and for each vehicle (140) of the at least one vehicle (140), a position determining device (148) determines position information relating to the position of the vehicle (140). A sensor (144) on each vehicle (140) determines proximity information based on proximity of the agent (120) to the vehicle (140). A position of the agent (120) is determined based on the proximity information and the position information from each vehicle (140) of the at least one vehicle (140).

## Description

### Field of the Invention

The present invention relates to a method and a system to determine a position of an agent, such as a picker in a warehouse. The present invention also relates to a vehicle, a server and a task-allocation device.

### Background of the Invention

Warehouses store items ready for distribution or sale. Typically, the items in a warehouse are stored on multiple rows of shelves. When an order for an item is received by the warehouse, a picker is tasked with collecting the item from the shelf where the item is stored. Once the picker has picked the item from the shelf, the item is typically packaged ready for dispatch, for example, by placing the item in a box.

The picking, packing and dispatch processes can be shared between human pickers and autonomous vehicles. A picker is tasked with collecting the item from the shelf and placing the item in a packing box on a designated autonomous vehicle. The autonomous vehicle then transports the packing box to the dispatch section of the warehouse or to another part of the warehouse where further items will be received. The use of autonomous vehicles reduces the distance over which a picker needs to travel in order to pick and dispatch items - the picker need only take an item to the designated autonomous vehicle rather than having to, for example, walk all the way across the warehouse to a dispatch point. In this way, the human pickers can be more efficient by concentrating on picking items rather than walking around the warehouse.

Picking instructions may be prepared by a task-allocation system, which instructs a picker to select a particular item. To allocate picking tasks efficiently, the task-allocation system needs to know the position of all of the autonomous vehicles, for example, so that the task-allocation system can direct a picker to the closest autonomous vehicle. Autonomous vehicles determine their position as they move around the warehouse and the autonomous vehicle can report this position to the task-allocation system.

The task-allocation system also needs to know the position of all of the pickers so that the task-allocation system can select a most appropriate picker to pick a particular item (for example, the picker who is closest to the item) and can direct the picker to an appropriate autonomous vehicle to deposit the item.

However, equipping each picker with their own position determining device would require expensive and complicated position determining hardware to be provided to each picker.

The position determining device could include a sensor which reads a barcode on a shelf or an item to determine the location of the picker. However, equipping each picker with a sensor which can read barcodes is expensive, and requires barcodes to be placed in known places on shelves or items.

Alternatively, the warehouse could be equipped with an indoor positioning system comprising an array of transmitters, such as WiFi access points, at known positions. The position determining device of the picker could determine the location of the pickers based on the intensity of the signal from the array of transmitters. However, equipping the warehouse with an array of transmitters is expensive and complex, because the location of all of the transmitters must be determined to a high degree of accuracy and additional infrastructure (such as power and mechanical supports) must be provided and maintained. Additionally, the intensity of the signal can be affected by obstacles in the signal path, such as shelves, leading to inaccuracy in the determination of the position of the pickers.

It would, therefore, be advantageous to find a method to determine the position of pickers which does not require the pickers to be equipped with a position determining device, or rely on the placement of barcodes or the installation of an indoor positioning system and associated infrastructure.

### Summary of the Invention

According to a first aspect of the invention, there is provided a method to determine a position of an agent. The method comprises providing at least one vehicle, and for each vehicle of the at least one vehicle, determining, using a position determining device, position information relating to the position of the vehicle, and determining, using a sensor on the vehicle, proximity information based on proximity of the agent to the vehicle. The method further comprises determining a position of the agent based on the proximity information and the position information from each vehicle of the at least one vehicle.

An advantage of determining the position of the agent based on the position information and the proximity information from each vehicle of the at least one vehicle is that the current or future position of the agent can be determined without needing to equip the agent with a position determining device, such as a sensor which determines the position of the agent based on targets placed around an environment, or based on a signal from an indoor positioning system. Instead, determining the position of the agent utilises the position determining device that is already provided on the vehicle, thereby eliminating the cost and time involved in providing position determining hardware to the agent.

As the agent does not require a position determining device, it becomes unnecessary to place targets (such as barcodes) in known positions around an environment solely for determining the position of the agent which provides a cost and time saving, particularly if the layout of the environment is frequently changing as there is no need to reposition targets. It also becomes unnecessary to install an indoor positioning system and associated infrastructure solely for determining the position of the agent, which removes the cost and time required to install transmitters (such as WiFi access points) for the indoor positioning system, and eliminates the complexity of considering transmitter placement and coverage (such as how obstacles may affect the signal from the transmitters).

The method may be particularly advantageous in an environment where regular agent-vehicle interactions can be expected as the vehicle will observe the agent during the normal course of the activities of the agent and vehicle.

The proximity information may relate to the agent being in proximity to the vehicle. For example, the proximity information may indicate that a vehicle, or vehicles, have observed the agent at a particular time, so the proximity information indicates that the location information represents the location of the agent at the particular time. Alternatively, the proximity information may relate to the agent not being in proximity to the vehicle. For example, the proximity information may indicate that a vehicle, or vehicles, have not observed the agent at a particular time, so the proximity information indicates that the location information represents a location at which the agent is not located at the particular time.

Determining the position of the agent may comprise using a predictive movement model based on the proximity information and the position information. Each time proximity information indicates that the agent has been observed in proximity to the vehicle of the at least one vehicle, the position information for the observation may be used to update the predictive movement model to indicate that a vehicle, or vehicles, have observed the agent at a particular time, to improve the prediction of a current or future position of the agent. Each time proximity information indicates that the agent has not been observed in proximity to a vehicle of the at least one vehicle, the position information for the observation may be used to update the predictive movement model to indicate that a vehicle, or vehicles, have not observed the agent at a particular time, to improve the predictions of a current or future position of the agent. An advantage of using a predictive movement model, particularly a predictive movement model containing position information for a number of observations when the agent was, or was not, in proximity to the vehicle is that the predictive movement model tends to produce a more accurate prediction of a current or future position of the agent than a single measurement of the position of the agent, as any single measurement of the position of the agent may be subject to errors, such as noise.

The predictive movement model may comprise either: a Kalman filter or a particle filter.

The predictive movement model may determine the position of the agent based on an occupancy grid, where the occupancy grid divides an environment into grid elements where each grid element indicates a likelihood of finding the agent in the respective grid element based on the position information and the proximity information. The occupancy grid may be based on the probability of finding an agent at a particular location in the environment. For example, an occupancy grid for a warehouse may take account of the fact that an agent is not likely to be located in a space occupied by a shelf, or that an agent is more likely to be located near to items that are sold frequently rather than items that are sold infrequently. The occupancy grid may be used to improve the accuracy of the prediction of a current or future position of the agent, by removing unlikely or impossible predictions of the position of the agent, and by weighting the prediction in favour of the places where the agent is most likely to be located.

The likelihood of finding an agent in each grid element of the occupancy grid may be updated based on the proximity information and the position information from each vehicle of the at least one vehicle. Each time the agent is determined to be in proximity to each vehicle of the at least one vehicle, the grid element in which the vehicle is located may be updated to represent the fact that at the time of the observation there was a high probability of the agent being located in the respective grid element. Similarly, each time the agent is determined to be not in proximity to each vehicle of the at least one vehicle, the grid square in which the vehicle is located may be updated to indicate that there was a low probability that the agent was located in the respective grid element at the time of the observation. The likelihood of finding an agent in each grid element of the occupancy grid may be updated based on a predicted speed at which the agent moves around the environment.

The predictive movement model may determine one or more paths of the agent between first and second locations in the environment. This allows the predictive movement model to determine the possible paths the agent may take between first and second locations in the environment, which may allow the predictive movement model to determine a maximum length of time for an agent to reach a particular location.

The predictive movement model may associate a cost with each path of the one or more paths. This allows the predictive movement model to improve the accuracy with which the predictive movement model determines which path the agent may take, and therefore may improve the determination of the maximum length of time for an agent to reach a particular location. For example, the cost may account for obstacles which make a particular path around the environment more favourable, or which prevent, or hinder, an agent from taking certain paths. For example, in a warehouse, the occupancy grid could associate a lower cost with an agent moving along an aisle between two shelves than with an agent moving across one of the shelves to the other side.

The paths and/or costs may be determined using a path-finding algorithm, such as the A* algorithm.

The sensor may comprise a keypad or a touch screen for determining that the agent is in proximity to the vehicle when the agent enters a code or password using the keypad or the touchscreen. This provides a straightforward way for an agent to indicate to a vehicle that the agent is in proximity to the vehicle, without the need for the agent to carry, for example, an identifying tag, thereby reducing cost and complexity.

The sensor may comprise a facial recognition device for determining that the agent is in proximity to the vehicle. This provides a way for the vehicle to recognise that an agent is in proximity to the vehicle and to identify the agent, without relying on the agent remembering to indicate their presence to the vehicle. It also means that the agent need not physically interact with the vehicle for the agent's proximity to the vehicle to be detected.

The sensor may comprise an RFID receiver which receives a signal from an RFID transmitter of the agent indicating that the agent is in proximity to the vehicle. This provides a reliable way for the vehicle to recognise that an agent is in proximity to the vehicle and to identify the agent, without relying on the agent remembering to indicate their presence to the vehicle. It also means that the agent need not physically interact with the vehicle for the agent's proximity to the vehicle to be detected.

The sensor may comprise a short-range wireless communications receiver which receives a signal from a short-range wireless communications transmitter of the agent indicating that the agent is in proximity to the vehicle. The short-range wireless communications receiver and short-range wireless transmitter may be configured according to ZigBee or Bluetooth standards. This provides a reliable way for the vehicle to recognise that an agent is in proximity to the vehicle and to identify the agent, without relying on the agent remembering to indicate their presence to the vehicle. It also means that the agent need not physically interact with the vehicle for the agent's proximity to the vehicle to be detected.

The distance between the vehicle and the agent may be determined based on the signal. This may improve the accuracy of determining the current or future position of the agent compared to just assuming that the position of the vehicle is a reliable indicator of the position of the agent, particularly when the sensor may detect the presence of the agent when the agent is some distance from the vehicle, such as when the sensor is based on facial recognition, RFID or short-range wireless communications.

The distance may be determined based on a signal strength of the signal.

The position of the agent may be determined based on the distance.

The position determining device may comprise one of: a barcode identification device; a dead-reckoning device; a laser positioning device; and a visual odometry device.

The method may further comprise allocating a task to the agent based on the determined position of the agent. An advantage of allocating tasks based on the determined position of the agent is that tasks may be allocated more efficiently. For example, the predictions of the determined position of the agent can be used to select an agent which is closest to an item to be picked, or which is closest to a vehicle or object with which the agent must interact.

Allocating the task may be based on one of: the availability of the agent; the proximity of the agent to the task; or congestion in a location in the vicinity of the task.

Tasks may be allocated based on a predicted time by which an agent is expected to reach a location. For example, the task may be allocated to the agent who can most quickly reach a location where a task it to be performed.

The task may be allocated based on a maximum predicted time for an agent to reach a location. For example, if an agent has a choice of paths to reach a location, the decision over whether to allocate the task to an agent may be based on the predicted time for the slowest path. Alternatively, the task may be allocated based on an average predicted time.

The method may further comprise sending information about the task to a task-allocation device. An agent may carry a task-allocation device which informs the agent about the task. The task-allocation device may direct the agent to the location where the task is to be performed.

The vehicle may be an automated guided vehicle.

The method may further comprise predicting a future position of the agent.

The method may further comprise allocating a task based on the predicted future position. This may allow tasks to be allocated more efficiently. For example, by allocating a task to an agent who is predicted to be in a particular location where the need to perform a task is anticipated.The agents may be pickers, such as pickers who select goods from shelves in a warehouse for despatch to customers. Alternatively, the agents may be customers, such as customers at a theme park, or shoppers at a supermarket.

According to a second aspect of the invention, there is provided a system to determine a position of an agent. The system has at least one vehicle and a server. Each vehicle of the at least one vehicle has a position determining device, a sensor, and a communications device. The position determining device is configured to determine position information relating to the position of the vehicle. The sensor is configured to determine proximity information based on proximity of the agent to the vehicle. The communications device is configured to send the position information and the proximity information to the server. The server has a communications interface and a processor. The communications interface is configured to receive the position information and the proximity information from each vehicle of the at least one vehicle. The processor is configured to determine a position of the agent based on the position information and the proximity information received from each vehicle of the at least one vehicle.

An advantage of determining the position of the agent based on the position information and the proximity information from each vehicle of the at least one vehicle is that the current or future position of the agent can be determined without needing to equip the agent with a position determining device, such as a sensor which determines the position of the agent based on targets placed around an environment, or based on a signal from an indoor positioning system. Instead, determining the position of the agent utilises the position determining device that is already provided on the vehicle, thereby eliminating the cost and time involved in providing position determining hardware to the agent.

As the agent does not require a position determining device, it becomes unnecessary to place targets (such as barcodes) in known positions around an environment solely for determining the position of the agent which provides a cost and time saving, particularly if the layout of the environment is frequently changing as there is no need to reposition targets. It also becomes unnecessary to install an indoor positioning system and associated infrastructure solely for determining the position of the agent, which removes the cost and time required to install transmitters (such as WiFi access points) for the indoor positioning system, and eliminates the complexity of considering transmitter placement and coverage (such as how obstacles may affect the signal from the transmitters).

The system may be particularly advantageous in an environment where regular agent-vehicle interactions can be expected as the vehicle will observe the agent during the normal course of the activities of the agent and vehicle.

The proximity information may relate to the agent being in proximity to the vehicle. For example, the proximity information may indicate that a vehicle, or vehicles, have observed the agent at a particular time, so the proximity information indicates that the location information represents the location of the agent at the particular time. Alternatively, the proximity information may relate to the agent not being in proximity to the vehicle. For example, the proximity information may indicate that a vehicle, or vehicles, have not observed the agent at a particular time, so the proximity information indicates that the location information represents a location at which the agent is not located at the particular time.

Determining the position of the agent may comprise using a predictive movement model based on the proximity information and the position information. Each time proximity information indicates that the agent has been observed in proximity to the vehicle of the at least one vehicle, the position information for the observation may be used to update the predictive movement model to indicate that a vehicle, or vehicles, have observed the agent at a particular time, to improve the prediction of a current or future position of the agent. Each time proximity information indicates that the agent has not been observed in proximity to a vehicle of the at least one vehicle, the position information for the observation may be used to update the predictive movement model to indicate that a vehicle, or vehicles, have not observed the agent at a particular time, to improve the predictions of a current or future position of the agent. An advantage of using a predictive movement model, particularly a predictive movement model containing position information for a number of observations when the agent was, or was not, in proximity to the vehicle is that the predictive movement model tends to produce a more accurate prediction of a current or future position of the agent than a single measurement of the position of the agent, as any single measurement of the position of the agent may be subject to errors, such as noise.

The predictive movement model may comprise either: a Kalman filter; or a particle filter.

The predictive movement model may determine the position of the agent based on an occupancy grid, where the occupancy grid divides an environment into grid elements where each grid element indicates a likelihood of finding the agent in the respective grid element based on the position information and the proximity information. The occupancy grid may be based on the probability of finding an agent at a particular location in the environment. For example, an occupancy grid for a warehouse may take account of the fact that an agent is not likely to be located in a space occupied by a shelf, or that an agent is more likely to be located near to items that are sold frequently rather than items that are sold infrequently. The occupancy grid may be used to improve the accuracy of the prediction of a current or future position of the agent, by removing unlikely or impossible predictions of the position of the agent, and by weighting the prediction in favour of the places where the agent is most likely to be located.

The likelihood of finding an agent in each grid element of the occupancy grid may be updated based on the proximity information and the position information from each vehicle of the at least one vehicle each time the agent is determined to be in proximity to each vehicle of the at least one vehicle, the grid element in which the vehicle is located may be updated to represent the fact that at the time of the observation there was a high probability of the agent being located in the respective grid element. Similarly, each time the agent is determined to be not in proximity to each vehicle of the at least one vehicle, the grid square in which the vehicle is located may be updated to indicate that there was a low probability that the agent was located in the respective grid element at the time of the observation. The likelihood of finding an agent in each grid element of the occupancy grid may be updated based on a predicted speed at which the agent moves around the environment.

The predictive movement model may determine one or more paths of the agent between first and second locations in the environment. This allows the predictive movement model to determine the possible paths the agent may take between first and second locations in the environment, which may allow the predictive movement model to determine a maximum length of time for an agent to reach a particular location.

The predictive movement model may associate a cost with each path of the one or more paths. This allows the predictive movement model to improve the accuracy with which the predictive movement model determines which path the agent may take, and therefore may improve the determination of the maximum length of time for an agent to reach a particular location. For example, the cost may account for obstacles which make a particular path around the environment more favourable, or which prevent, or hinder, an agent from taking certain paths. For example, in a warehouse, the occupancy grid could associate a lower cost with an agent moving along an aisle between two shelves than with an agent moving across one of the shelves to the other side.

The paths and/or costs may be determined using a path-finding algorithm, such as the A* algorithm.

The sensor may comprise a keypad or a touchscreen for determining that the agent is in proximity to the vehicle when the agent enters a code or password using the keypad or touchscreen. This provides a straightforward way for an agent to indicate to a vehicle that the agent is in proximity to the vehicle, without the need for the agent to carry any kind of identifying tag, reducing cost and complexity.

The sensor may comprise a facial recognition device for determining that the agent is in proximity to the vehicle. This provides a way for the vehicle to recognise that an agent is in proximity to the vehicle and to identify the agent, without relying on the agent remembering to indicate their presence to the vehicle. It also means that the agent need not physically interact with the vehicle for the agent's proximity to the vehicle to be detected.

The sensor may comprise an RFID receiver configured to receive a signal from an RFID transmitter of the agent indicating that the agent is in proximity to the vehicle. This provides a reliable way for the vehicle to recognise that an agent is in proximity to the vehicle and to identify the agent, without relying on the agent remembering to indicate their presence to the vehicle. It also means that the agent need not physically interact with the vehicle for the agent's proximity to the vehicle to be detected.

The sensor may comprise a short-range wireless communications receiver configured to receive a signal from a short-range wireless communications transmitter of the agent indicating that the agent is in proximity to the vehicle. The short-range wireless communications receiver and short-range wireless transmitter may be configured according to ZigBee or Bluetooth standards. This provides a reliable way for the vehicle to recognise that an agent is in proximity to the vehicle and to identify the agent, without relying on the agent remembering to indicate their presence to the vehicle. It also means that the agent need not physically interact with the vehicle for the agent's proximity to the vehicle to be detected.

The processor may be configured to determine a distance between the vehicle and the agent based on the signal. This may improve the accuracy of determining the current or future position of the agent compared to just assuming that the position of the vehicle is a reliable indicator of the position of the agent, particularly when the sensor may detect the presence of the agent when the agent is some distance from the vehicle, such as when the sensor is based on facial recognition, RFID or short-range wireless communications.

The distance may be determined based on a signal strength of the signal.

The processor may be configured to determine the position of the agent based on the distance.

The position determining device may comprise one of: a barcode identification device; a dead-reckoning device; a laser positioning device; and a visual odometry device.

The processor may be further configured to allocate a task to the agent based on the determined position of the agent. An advantage of allocating tasks based on the determined position of an agent is that tasks may be allocated more efficiently. For example, the predictions of the determined position of the agent can be used to select an agent which is closest to an item to be picked, or which is closest to a vehicle or object with which the agent must interact.

The processor may be further configured to allocate the task based on one of: the availability of the agent; the proximity of the agent to the task; or congestion in a location in the vicinity of the task.

Tasks may be allocated based on a predicted time by which an agent is expected to reach a location. For example, the task may be allocated to the agent who can most quickly reach a location where a task is to be performed.

The task may be allocated based on a maximum predicted time for an agent to reach a location. For example, if an agent has a choice of paths to reach a location, the decision over whether to allocate the task to an agent may be based on the predicted time for the slowest path. Alternatively, the task may be allocated based on an average predicted time.

The communications interface may be further configured to send information about the task to a task-allocation device. An agent may carry a task-allocation device which informs the agent about the task.

The vehicle may be an automated guided vehicle.

The processor may be further configured to predict a future position of the agent based on the position information.

The processor may be further configured to allocate a task based on the predicted future position. This may allow tasks to be allocated more efficiently. For example, by allocating a task to an agent who is predicted to be in a particular location where the need to perform a task is anticipated.

The agents may be pickers, such as pickers who select goods from shelves in a warehouse for despatch to customers. Alternatively, the agents may be customers, such as customers at a theme park, or shoppers at a supermarket.

According to a third aspect of the invention, there is provided a vehicle comprising a position determining device, a sensor, and a communications interface. The position determining device is configured to determine position information relating to the position of the vehicle. The sensor is configured to determine proximity information based on proximity of an agent to the vehicle. The communications interface is configured to send the position information and the proximity information to a server configured to receive the position information and the proximity information and determine the position of the agent based on the position information and the proximity information received from the vehicle.

An advantage of determining the position of the agent based on the position information from each vehicle of the at least one vehicle is that the current or future position of the agent can be determined without needing to equip the agent with a position determining device, such as a sensor which determines the position of the agent based on targets placed around an environment, or based on a signal from an indoor positioning system. Instead, determining the position of the agent utilises the position determining hardware that is already provided on the vehicle, thereby eliminating the cost and time involved in providing position determining hardware to the agent.

As the agent does not require a position determining device, it becomes unnecessary to place targets (such as barcodes) in known positions around an environment solely for determining the position of the agent, which provides a cost and time saving, particularly if the layout of the environment is frequently changing as there is no need to reposition targets. It also becomes unnecessary to install an indoor positioning system and associated infrastructure solely for determining the position of the agent, which removes the cost and time required to install transmitters (such as WiFi access points) for the indoor positioning system, and eliminates the complexity of considering transmitter placement and coverage (such as how obstacles may affect the signal from the transmitters).

Determining the position of the agent based on position information received from the vehicle may be particularly advantageous in an environment where regular agent-vehicle interactions can be expected as the vehicle will observe the agent during the normal course of the activities of the agent and vehicle.

The proximity information may relate to the agent being in proximity to the vehicle. For example, the proximity information may indicate that the vehicle has observed the agent at a particular time, so the proximity information indicates that the location information represents the location of the agent at the particular time. The proximity information may also relate to the agent not being in proximity to the vehicle. For example, the proximity information may indicate that the vehicle has not observed the agent at a particular time, so the proximity information indicates that the location information represents a location at which the agent is not located at the particular time. As the vehicle moves around an environment, the vehicle may make observations that the agent is in proximity to the vehicle at particular times and not in proximity to the vehicle at other particular times.

The sensor may comprise a keypad or a touchscreen for determining that the agent is in proximity to the vehicle when the agent enters a code or password using the keypad or the touchscreen. This provides a straightforward way for an agent to indicate to a vehicle that the agent is in proximity to the vehicle, without the need for the agent to carry any kind of identifying tag, reducing the cost and complexity.

The sensor may comprise a facial recognition device for determining that the agent is in proximity to the vehicle. This provides a way for the vehicle to recognise that an agent is in proximity to the vehicle and to identify the agent, without relying on the agent remembering to indicate their presence to the vehicle. It also means that the agent need not physically interact with the vehicle for the agent's proximity to the vehicle to be detected.

The sensor may comprise an RFID receiver configured to receive a signal from an RFID transmitter of the agent indicating that the agent is in proximity to the vehicle. This provides a reliable way for the vehicle to recognise that an agent is in proximity to the vehicle and to identify the agent, without relying on the agent remembering to indicate their presence to the vehicle. It also means that the agent need not physically interact with the vehicle for the agent's proximity to the vehicle to be detected.

The sensor may comprise a short-range wireless communications receiver configured to receive a signal from a short-range wireless communications transmitter of the agent indicating that the agent is in proximity to the vehicle. The short-range wireless communications receiver and short-range wireless transmitter may be configured according to ZigBee or Bluetooth standards. This provides a reliable way for the vehicle to recognise that an agent is in proximity to the vehicle and to identify the agent, without relying on the agent remembering to indicate their presence to the vehicle. It also means that the agent need not physically interact with the vehicle for the agent's proximity to the vehicle to be detected.

The sensor may be configured to determine a distance between the vehicle and the agent based on the signal. This may improve the accuracy of determining the current or future position of the agent compared to just assuming that the position of the vehicle is a reliable indicator of the position of the agent, particularly when the sensor may detect the presence of the agent when the agent is some distance from the vehicle, such as when the sensor is based on facial recognition, RFID or short-range wireless communications.

The distance may be determined based on a signal strength of the signal.

The position determining device may comprise one of: a barcode identification device; a dead-reckoning device; a laser positioning device; and a visual odometry device.

The vehicle may be an automated guided vehicle.

According to a fourth aspect of the invention, there is provided a server comprising a communications interface and a processor. The communications interface is configured to receive position information from at least one vehicle configured according to the third aspect. The processor is configured to determine a position of the agent based on the position information and the proximity information received from each vehicle of the at least one vehicle.

An advantage of determining the position of the agent based on the position information and the proximity information from each vehicle of the at least one vehicle is that the current or future position of the agent can be determined without needing to equip the agent with a position determining device, such as a sensor which determines the position of the agent based on targets placed around an environment, or based on a signal from an indoor positioning system. Instead, determining the position of the agent utilises the position determining hardware that is already provided on the vehicle, thereby eliminating the cost and time involved in providing position determining hardware to the agent.

As the agent does not require a position determining device, it becomes unnecessary to place targets (such as barcodes) in known positions around an environment solely for determining the position of the agent which provides a cost and time saving, particularly if the layout of the environment is frequently changing as there is no need to reposition targets. It also becomes unnecessary to install an indoor positioning system and associated infrastructure solely for determining the position of the agent, which removes the cost and time required to install transmitters (such as WiFi access points) for the indoor positioning system, and eliminates the complexity of considering transmitter placement and coverage (such as how obstacles may affect the signal from the transmitters).

Determining the position of the agent based on the position information and the proximity information received from each vehicle of the at least one vehicle may be particularly advantageous in an environment where regular agent-vehicle interactions can be expected as the vehicle will observe the agent during the normal course of the activities of the agent and vehicle.

The proximity information may relate to the agent being in proximity to the vehicle. For example, the proximity information may indicate that a vehicle, or vehicles, have observed the agent at a particular time, so the proximity information indicates that the location information represents the location of the agent at the particular time. Alternatively, the proximity information may relate to the agent not being in proximity to the vehicle. For example, the proximity information may indicate that a vehicle, or vehicles, have not observed the agent at a particular time, so the proximity information indicates that the location information represents a location at which the agent is not located at the particular time.

Determining the position of the agent may comprise using a predictive movement model based on the proximity information and the position information. Each time proximity information indicates that the agent has been observed in proximity to the vehicle of the at least one vehicle, the position information for the observation may be used to update the predictive movement model to indicate that a vehicle, or vehicles, have observed the agent at a particular time, to improve the prediction of a current or future position of the agent. Each time proximity information indicates that the agent has not been observed in proximity to a vehicle of the at least one vehicle, the position information for the observation may be used to update the predictive movement model to indicate that a vehicle, or vehicles, have not observed the agent at a particular time, to improve the predictions of a current or future position of the agent. An advantage of using a predictive movement model, particularly a predictive movement model containing position information for a number of observations when the agent was, or was not, in proximity to the vehicle is that the predictive movement model tends to produce a more accurate prediction of a current or future position of the agent than a single measurement of the position of the agent, as any single measurement of the position of the agent may be subject to errors, such as noise.

The predictive movement model may comprise either: a Kalman filter; or a particle filter.

The predictive movement model may determine the position of the agent based on an occupancy grid, where the occupancy grid divides an environment into grid elements where each grid element indicates a likelihood of finding the agent in the respective grid element based on the position information and the proximity information. The occupancy grid may be based on the probability of finding an agent at a particular location in the environment. For example, an occupancy grid for a warehouse may take account of the fact that an agent is not likely to be located in a space occupied by a shelf, or that an agent is more likely to be located near to items that are sold frequently rather than items that are sold infrequently. The occupancy grid may be used to improve the accuracy of the prediction of a current or future position of the agent, by removing unlikely or impossible predictions of the position of the agent, and by weighting the prediction in favour of the places where the agent is most likely to be located.

The likelihood of finding an agent in each grid element of the occupancy grid may be updated based on the proximity information and the position information from each vehicle of the at least one vehicle. Each time the agent is determined to be in proximity to each vehicle of the at least one vehicle, the grid element in which the vehicle is located may be updated to represent the fact that at the time of the observation there was a high probability of the agent being located in the respective grid element. Similarly, each time the agent is determined to be not in proximity to each vehicle of the at least one vehicle, the grid square in which the vehicle is located may be updated to indicate that there was a low probability that the agent was located in the respective grid element at the time of the observation. The likelihood of finding an agent in each grid element of the occupancy grid may be updated based on a predicted speed at which the agent moves around the environment.

The predictive movement model may determine one or more paths of the agent between first and second locations in the environment. This allows the predictive movement model to determine the possible paths the agent may take between first and second locations in the environment, which may allow the predictive movement model to determine a maximum length of time for an agent to reach a particular location.

The predictive movement model may associate a cost with each path of the one or more paths. This allows the predictive movement model to improve the accuracy with which the predictive movement model determines which path the agent may take, and therefore may improve the determination of the maximum length of time for an agent to reach a particular location. For example, the cost may account for obstacles which make a particular path around the environment more favourable, or which prevent, or hinder, an agent from taking certain paths. For example, in a warehouse, the occupancy grid could associate a lower cost with an agent moving along an aisle between two shelves than with an agent moving across one of the shelves to the other side.

The paths and/or costs may be determined using a path-finding algorithm, such as the A* algorithm.

The position of the agent may be determined based on the distance between the vehicle and the agent. This may improve the accuracy of determining the current or future position of the agent compared to just assuming that the position of the vehicle is a reliable indicator of the position of the agent, particularly when the sensor may detect the presence of the agent when the agent is some distance from the vehicle, such as when the sensor is based on facial recognition, RFID or short-range wireless communications.

The processor may be configured to allocate a task to the agent based on the determined position of the agent. An advantage of allocating tasks based on the determined position of an agent is that tasks may be allocated more efficiently. For example, the predictions of the determined position of the agent can be used to select an agent which is closest to an item to be picked, or which is closest to a vehicle or object with which the agent must interact.

The processor may be configured to allocate the task based on one of: the availability of the agent; the proximity of the agent to the task; or congestion in the location in the vicinity of the task.

Tasks may be allocated based on a predicted time by which an agent is expected to reach a location. For example, the task may be allocated to the agent who can reach the location most quickly.

The task may be allocated based on a maximum predicted time for an agent to reach a location. For example, if an agent has a choice of paths to reach a location, the decision over whether to allocate the task to an agent may be based on the predicted time for the slowest path. Alternatively, the task may be allocated based on an average predicted time.

The communications interface may be configured to send information about the task to a task-allocation device. An agent may carry a task-allocation device which informs the agent about the task. The task-allocation device may inform the agent of the location at which a task is to be performed.

The processor may be configured to predict a future position of the agent based on the position information.

The server may be configured to allocate a task based on the predicted future position. This may allow tasks to be allocated more efficiently. For example, by allocating a task to an agent who is predicted to be in a particular future location where the need to perform a task is anticipated.

The agents may be pickers, such as pickers who select goods from shelves in a warehouse for despatch to customers. Alternatively, the agents may be customers, such as customers at a theme park, or shoppers at a supermarket.

According to a fifth aspect of the invention, there is provided a task-allocation device comprising a communications interface and an output device. The communications interface is configured to receive a task from a server configured according to the fourth aspect. The output device is configured to instruct an agent to perform the task.

An agent may carry a task-allocation device which informs the agent about the task.

The output device may inform the agent of the location at which a task is to be performed.

The agents may be pickers, such as pickers who select goods from shelves in a warehouse for despatch to customers. Alternatively, the agents may be customers, such as customers at a theme park, or shoppers at a supermarket.

The output may be a visual display or an audio headset.

The task-allocation device may be attached to a vehicle, or a shelf.

### Brief Description of the Drawings

The invention shall now be described, by way of example only, with reference to the accompanying drawings, in which:
Figure 1 is a plan view of a warehouse, including pickers, a vehicle and a task-allocation server;
Figure 2 illustrates the task-allocation server of Figure 1 in more detail;
Figure 3 illustrates the vehicle of Figure 1 in more detail;
Figure 4 illustrates a method of determining the position of a picker according to an embodiment of the invention; and
Figure 5 illustrates an apparatus for determining the position of a picker according to an embodiment of the invention.

### Detailed Description

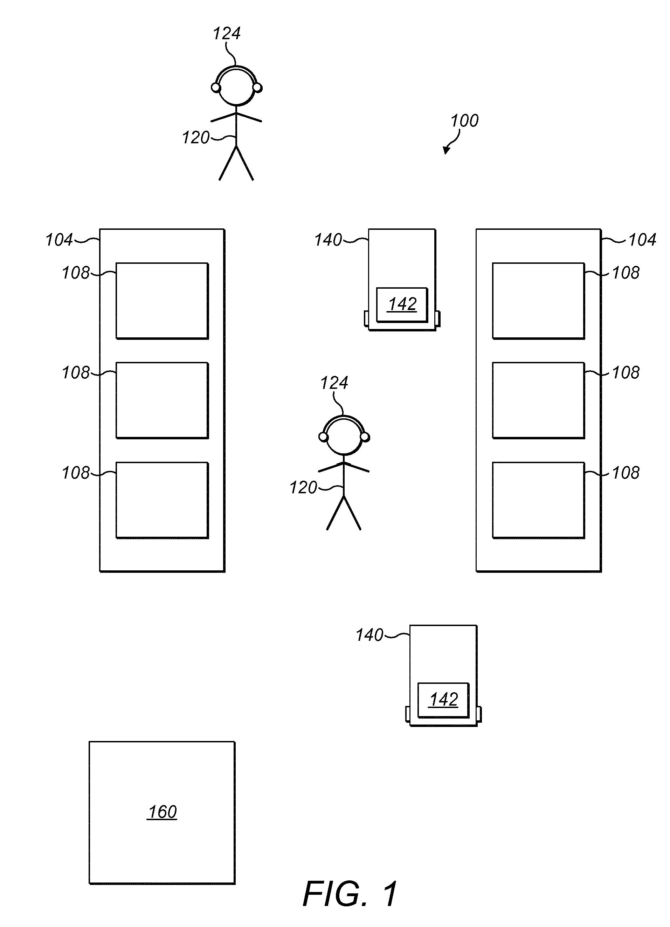

Figure 1 shows a warehouse 100. The warehouse 100 has shelves 104 which contain a number of items 108. The items 108 may be, for example, items which the warehouse stocks for distribution or sale (such as food items, items of consumer electronics, or household items).

A number of pickers 120 work in the warehouse 100. The job of the pickers 120 is to select items 108 which are ordered by a customer and package them for dispatch to the customer.

A task-allocation server 160 receives an order for items 108 from a customer and prepares instructions to a picker 120 to pick items 108 from the shelves 104.

The picker 120 receives the instructions from the task-allocation server 160 telling the picker 120 which of the items 108 to select. The picker 120 receives the instructions through a task-allocation device, such as audio headset 124 which gives verbal instructions to the picker 120.

The warehouse 100 also contains vehicles 140. The vehicles 140 are automated guided vehicles that move around the warehouse 100 under the control of the task-allocation server 160. Each of the vehicles 140 is designed to hold a picking carton 142.

After the picker 120 has picked items 108, the picker 120 takes the items 108 to a vehicle 140 and places the items 108 into the picking carton 142 on the vehicle. The task-allocation server 160 instructs the picker 120, via their audio headset 124, as to which vehicle 140 the items 108 should be taken.

The vehicle 140 then takes the picking carton 142 to an area of the warehouse 100 where the picking carton 142 will be dispatched, or to another area of the warehouse 100 where one or more further item 108 will be added to the picking carton 142.

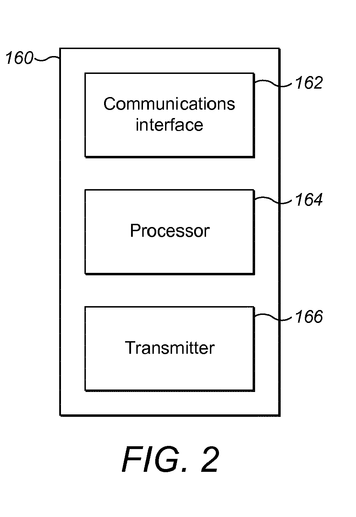

Figure 2 shows the task-allocation server 160 in more detail. The task-allocation server 160 has a communications interface 162 which receives orders, for example from customers over the internet. A processor 164 processes the order, selects an appropriate picker 120 and prepares instructions to the selected picker 120. The task-allocation server 160 has a transmitter 166 which transmits instructions to the headset 124 of the selected picker 120 to pick the order.

In order for the task-allocation server to select an appropriate picker 120, it is necessary for the task-allocation server 160 to know the position of each of the pickers 120 in the warehouse 100. This allows the task-allocation server 160 to select the most appropriate picker 120, for example, by selecting the picker 120 who is closest to the item 108 which is to be picked, or the picker 120 who can reach the item 108 most quickly.

Giving each of the pickers 120 a position determining device leads to each of the pickers 120 having to carry an unnecessarily bulky, and expensive, position determining device. Furthermore, it is expensive and inconvenient to equip the warehouse 100 with the barcodes or indoor positioning system the position determining device would typically need to report the position of each picker 120.

However, the vehicle 140, being an automated guided vehicle, will already have a position determining device.

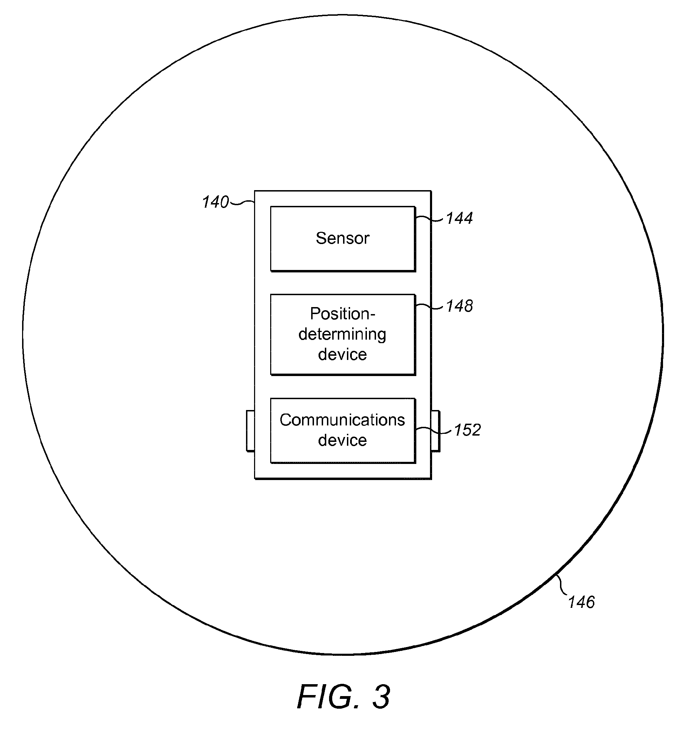

Figure 3 shows the vehicle 140 in more detail. The vehicle 140 has a position-determining device 148 which allows the position of the vehicle 140 to be accurately located within the warehouse 100, for example, using barcode identification, a dead-reckoning device, a laser positioning device or visual odometry.

The vehicle 140 has a sensor 144 which is able to determine when a picker 120 is in a zone 146 around the vehicle 140, such as, when a picker 120 passes in close proximity to the vehicle 140 or interacts with the vehicle 140.

The vehicle 140 also has a communications device 152 which transmits the position of the vehicle 140 to the task-allocation server 160, so that the task-allocation server 160 knows where the vehicle 140 is located within the warehouse 100. It is useful for the task-allocation server 160 to know where the vehicle 140 is located within the warehouse 100 because this allows the task-allocation server 160 to allocate tasks to the most appropriate vehicle 140, for example, by directing a picker 120 to deposit an item 108 at the closest vehicle 140, or the vehicle 140 the picker 120 can reach most quickly.

The position of the vehicle 140, as measured by the position-determining device 148, can be used to approximate the position of a picker 120 at a time when the picker 120 passes into the zone 146. When the sensor 144 detects that a picker 120 has entered the zone 146 around the vehicle 140, the vehicle 140 transmits a signal to the task-allocation server 160 using the communications device 152. The signal indicates that the picker 120 is in the vicinity 146 of vehicle 140. The signal includes identifying information about the picker 120 along with the position of the vehicle 140 as determined by the position determining device 148.

The task-allocation server uses the position information of the vehicle 140 to determine the current position of the picker 120.

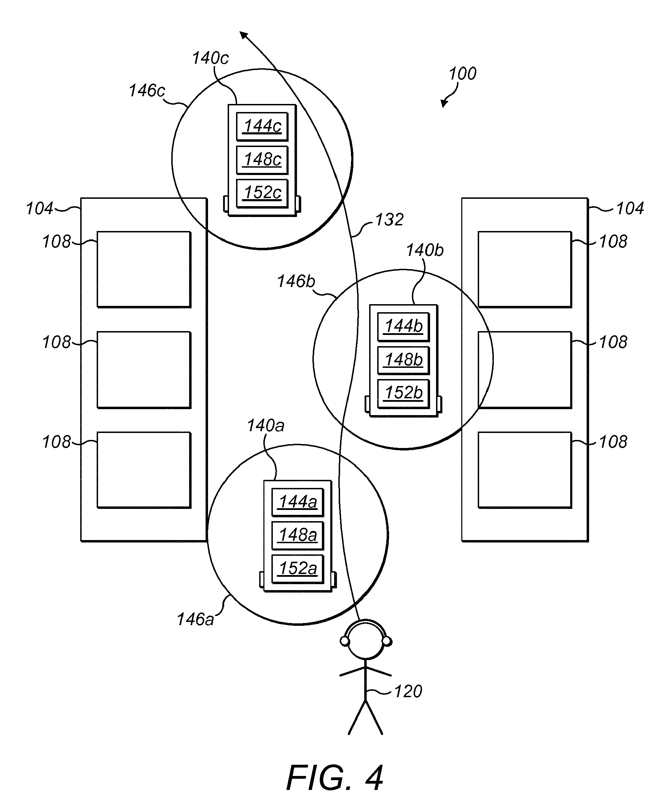

Figure 4 illustrates a path 132 of a picker 120 as the picker 120 moves around the warehouse 100 picking items 108 from the shelves 104.

The picker 120 first passes within the zone 146a around vehicle 140a. The sensor 144a on the vehicle 140a determines that the picker 120 is in the zone 146a around the vehicle 140a. The communications device 152a sends the task-allocation server 160 the position of the vehicle 140a as determined by the position-determining device 148a.

As the picker 120 moves along the path 132, the picker 120 leaves the zone 146a and enters the zone 146b around vehicle 140b. The sensor 144b of the vehicle 140b detects that the picker 120 is in the zone 146b around the vehicle 140b. The communications device 152b sends the task-allocation server 160 the position of the vehicle 140b as determined by the position-determining device 148b.

As the picker moves yet further along the path 132, the picker 120 leaves the zone 146b and after a short period, the picker 120 enters the zone 146c around the vehicle 140c. The sensor 144c on the vehicle 140c detects that the picker 120 is in the zone 146c around the vehicle 140c. The communications device 152c sends the task-allocation server 160 the position of the vehicle 140c as determined by the position-determining device 148c.

The observations that the picker 120 was in the zones 146a, 146b and 146c at particular times are used to update a predictive movement model for the picker 120 to allow a future location of the picker 120 to be predicted. The predictive movement model is based on either a Kalman filter or a particle filter.

As further observations are obtained of the location of the picker 120 from further vehicles 140, the further observations can be added to the predictive movement model.

As the picker 120 moves along the path 132, the picker 120 passes through various zones 146a, 146b and 146c. As the picker enters each zone 146a, 146b and 146c, the position of the respective vehicle 140a, 140b and 140c is sent to the task-allocation server 160, as discussed above. The vehicle 140a, 140b and 140c may also send information to the task-allocation server 160 indicating that the picker 120 is not currently in the zone 146a, 146b or 146c. For example, when the picker 120 is in the zone 146a around vehicle 140a, the vehicle 140b may send the task-allocation server 160 the position of the vehicle 140b and provide information to the task-allocation server 160 indicating that the picker 120 is not currently in the zone 146b around vehicle 140b, and the vehicle 140c may send the task-allocation server 160 the position of the vehicle 140c and provide information to the task-allocation server 160 indicating the picker 120 is not currently in the zone 146c. The task-allocation server 160 may use this information to update the predictive movement model to indicate that it is unlikely that the picker 120 is in the zones 146b and 146c at that moment in time.

Although Figure 4 only illustrates the path 132 of a single picker 120, the warehouse may have a plurality of pickers, and observations of the location of each of the pickers can be provided to the task-allocation server 160 by vehicles 140 to update a predictive movement model for each picker, so that the position of any of the pickers can be predicted.

The task-allocation server 160 can use the predictive movement model to allocate tasks to pickers 120 in a more efficient manner. For example, the task-allocation server 160 can use predictions of the locations of pickers 120 to select a picker who is closest to an item 108 to be picked, or to select a picker 120 who can mostly quickly reach a location where a task is to be performed.

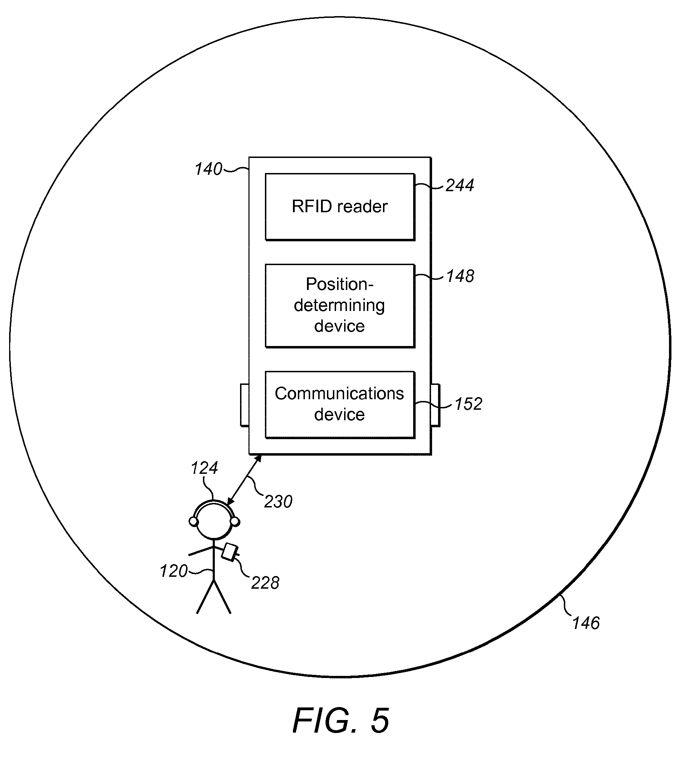

Figure 5 shows an embodiment of the present invention in which the vehicle 140 has a sensor in the form of an RFID reader 244. A picker 120 has an RFID tag 228 on their person.

The RFID tag reader 244 emits an RF signal which is returned by the RFID tag 228 to indicate the presence of the RFID tag 228 to the RFID tag reader 244. When the RFID tag reader 244 receives the returned signal indicating the presence of the RFID tag 228, the position-determining device 148 reports the position of the vehicle 140 to the task-allocation server 160.

The zone 146 is marked by the region around the vehicle 140 in which the RFID tag reader 244 is able to detect the presence of the RFID tag 228, or in which the returned signal from the RFID tag 228 is above a threshold.

The RFID reader 244 is also able to determine the distance 230 between the RFID tag 228 and the RFID tag reader 244 by measuring the strength of the signal returned from the RFID tag 228 in comparison to the signal sent to the RFID tag 244. The distance 230 can be sent to the task-allocation server 160 which uses the distance 230 to refine the determined position of the picker 120, rather than assuming that the position of the picker 120 is the same as the position of the vehicle 140.

Although the invention has been described in terms of certain preferred embodiments, the skilled person would appreciate that various modifications can be made without departing from the scope of the appended claims.

Although the invention has been described in terms of vehicle which is an automated guided vehicle, it is not essential that the vehicle is an automated guided vehicle and the vehicle could be under manual control instead, for example, the vehicle could be pushed around by a picker.

Although the invention has been described in terms of coordinating pickers and vehicles to pick items in a warehouse, the invention is equally applicable to coordinating humans and vehicles in other situations.

For example, the invention could be used in an amusement park. In amusement parks, a customer is often provided with an RFID bracelet which the customer can use to book and access attractions, pay for services, and access lockers and hotel rooms. The customer may book a ride for a prescribed timeslot. Shortly before the timeslot occurs, a vehicle may observe the customer in a location which is so far from the ride that the customer will be unable to reach the ride before the timeslot begins. A scheduler (such as a task-allocation server) may therefore inform the customer (via for example, a display on, or audio announcement from, the vehicle) that their ride booking cannot be met. The scheduler may search for another customer to take the customer's place, such as another customer who has reserved a place at the attraction during a later time slot, or who is listed on a reserve list, and is in close proximity to the attraction or who can reach the attraction quickly. The other customer can then be directed to use the available seats on the attraction, maximising the capacity of the attraction and the throughput of customers.

In another example, a supermarket trolley may be equipped with a position determining device and a sensor to determine that a customer is in proximity to the trolley, for example by scanning a loyalty card or some other form of unique identifier associated with the customer. Shopping pattern analysis may allow the behaviour of customers to be predicted. For example, when a customer collects a magazine first, they may be expected to visit a checkout area within a few minutes. However if the customer collects fruit first, they may take approximately an hour to visit the checkout. A scheduler may analyse the observations of the position of the customer as obtained by their interaction with one or more trolleys to predict checkout demand. Based on the observations, the scheduler may assign shop staff to either a checkout or shelf stacking duties depending on the predicted checkout demand.

Although the task-allocation device has been described as an audio headset 124, the task-allocation device could instruct pickers 120 to perform tasks in any way. For example, the task-allocation device could be a device with a display which provides visual instructions, such as text or graphics, indicating the items to be picked. For example, the task-allocation device could be a tablet computer, a smartphone, or a handheld device. Alternatively, the task-allocation device could be a display fixed to a shelf 104 or other part of the warehouse 100, or a display fixed to a vehicle 140.

The sensor 144 may determine identifying information about the picker 120. The identifying information could be sent to the task-allocation server 160 along with the position of the vehicle 140 to allow the task-allocation server 160 to identify the picker that was observed by the vehicle 140.

The sensor 144 may be any sensor which allows the sensor 144 to determine that a picker 120 is close to the vehicle 140.

For example, the sensor 144 could be a camera mounted to the vehicle 140 and the sensor 144 could determine that a picker 120 is in proximity to the vehicle 140 using facial recognition. A database of facial profiles of pickers 120 could be stored either on the vehicle 140, or the vehicle could send facial profile information to the task-allocation server 160, or to another server, which could perform the facial recognition function to allow the task-allocation server 160 to identify the picker 120. The size of the face in the image could be used to determine the distance 230 between the picker 120 and the vehicle 140. With other sensors 144, it is usually only know that the picker 120 is somewhere within a circular zone around the vehicle 140, whereas with a camera the orientation of the camera may be used to determine the position of the picker 120 with respect to the vehicle 140.

Alternatively, the sensor 144 could be a short-range wireless communications receiver and a picker 120 could wear a short-range wireless communications transmitter. For example, a ZigBee or Bluetooth short-range wireless communications transmitter and receiver. The distance 230 could be determined based on the strength of the signal received by the short-range wireless communications receiver in comparison to the signal transmitted by the short-range wireless communications transmitter.

The RFID tag, or short-range wireless communications transmitter, may transmit identifying information to allow the picker 120 to be identified.

Alternatively, the sensor 144 could be a keypad or touchscreen. A picker 120 could indicate that the picker 120 is in proximity to the vehicle by entering a code or password using the keypad or touchscreen, or by simply touching a key on a keypad or by touching the touchscreen. The code or password may allow the picker 120 to be identified.

The predictive movement model may determine the position of the picker 120 using an occupancy grid. The occupancy grid divides the warehouse 100 into grid elements and indicates the likelihood of finding a picker 120 in each of the grid elements. So, the occupancy grid weights predictions of the position of the picker 120 in favour of locations in the warehouse 100 where the picker 120 is most likely to be located. For example, the occupancy grid may indicate that the probability of finding a picker 120 within a region of the warehouse 100 occupied by a shelf 104 is zero but the probability of finding a picker 120 within a corridor between shelves 104 is non-zero, or that a picker 120 is more likely to be located near to items 108 that are sold frequently rather than items 108 that are sold infrequently.

The observations that the picker 120 was in the zones 146a, 146b and 146c may be used to update the occupancy grid. Between observations, the occupancy grid may be updated based on a predicted speed at which the picker 120 moves between the zones 146a, 146b and 146c.

A path-finding algorithm (such as the A* algorithm) may be used to predict a path, or paths, that the picker 120 might take between zones 146a, 146b and 146c. The path-finding algorithm may determine a cost associated with the agent taking each of the paths. The cost may take account of obstacles which make particular paths around the environment more favourable, or which prevent, or hinder, an agent from taking certain paths. For example, in a warehouse, a path where an agent moves along an aisle between two shelves would be associated with a lower cost than a path where an agent has to walk around a shelf 104 into an adjacent aisle. The cost may be used to weight the predictive movement model in favour of using a particular path to calculate the position of the picker 120, for example, the task-allocation server may calculate the position of the picker 120 based on the slowest or longest path.

Although the invention has been described in terms of a predictive movement model which includes three observations of the picker 120 in zones 146a, 146b and 146c, the predictive movement model may include any number of observations of the picker 120 when the picker 120 is in proximity to one or more vehicles 140.

Instead of the distance 230 being sent to the task-allocation server along with the position of the vehicle 140, the vehicle 140 may determine the position of the picker 120 using the distance 230 and the position of the vehicle 140 and the vehicle 140 may send the position of the picker 120 to the task-allocation server 160.

The allocation of a task to a picker 120 may be based on the availability of the picker 120, or congestion in a location in the vicinity of the task.

Tasks may be allocated to a picker 120 based on a predicted time by which the picker 120 is expected to reach a location (such as, a location where an item 108 is to be picked, or where a task is to be carried out). For example, the task may be allocated to the picker 120 who can reach the location most quickly.

The task may be allocated based on a maximum predicted time for a picker 120 to reach the location. For example, if the picker 120 has a choice of paths to reach a location, the task allocation server 160 may decide whether to allocate the task to the picker 120 based on the predicted time for the slowest path by which the picker 120 could reach the location. Alternatively, the task may be allocated based on an average predicted time.

## Claims

1. A method to determine a position of an agent (120), the method comprising:
providing at least one vehicle (140), and for each vehicle (140) of the at least one vehicle (140):
determining, using a position determining device (148), position information relating to the position of the vehicle (140); and
determining, using a sensor (144) on the vehicle (140), proximity information based on proximity of the agent (120) to the vehicle (140);
the method further comprising determining a position of the agent (120) based on the proximity information and the position information from each vehicle (140) of the at least one vehicle (140).

2. The method of claim 1, further comprising determining the position of the agent (120) using a predictive movement model based on the proximity information and the position information.

3. The method of claim 2, wherein the predictive movement model determines the position of the agent (120) based on an occupancy grid, where the occupancy grid divides an environment into grid elements where each grid element indicates a likelihood of finding the agent (120) in the respective grid element based on the position information and the proximity information.

4. The method of either of claims 2 or 3, wherein the predictive movement model determines one or more paths of the agent (120) between first and second locations in an environment, and associates a cost with each path of the one or more paths.

5. The method of any preceding claim, further comprising predicting a future position of the agent (120).

6. The method of claim 5, further comprising allocating a task based on the predicted future position.

7. A system to determine a position of an agent (120), the system comprising:
at least one vehicle (140), each vehicle (140) of the at least one vehicle (140) comprising:
a position determining device (148) configured to determine position information relating to the position of the vehicle (140);
a sensor (144) configured to determine proximity information based on the proximity of the agent (120) to the vehicle (140); and
a communications device (152) configured to send the position information and the proximity information to a server (160);
the system further comprising:
a server (160) comprising:
a communications interface configured to receive position information and proximity information from each vehicle (140) of the at least one vehicle (140); and
a processor configured to determine a position of the agent (120) based on the proximity information and the position information received from each vehicle (140) of the at least one vehicle (140).

8. A vehicle (140) comprising:
a position determining device (148) configured to determine position information relating to the position of the vehicle (140);
a sensor (144) configured to determine proximity information based on proximity of an agent (120) to the vehicle (140); and
a communications interface configured to send the position information and the proximity information to a server (160) configured to receive the position information and the proximity information and to determine the position of the agent (120) based on the position information and the proximity information received from the vehicle (140).

9. The vehicle (140) of claim 8, wherein the sensor (144) comprises one of: a keypad or a touchscreen for determining that the agent (120) is in proximity to the vehicle (140) when the agent (120) enters a code or password using the keypad or the touchscreen; and a facial recognition device for determining that the agent (120) is in proximity to the vehicle (140).

10. The vehicle (140) of claim 8, wherein the sensor (144) comprises one of: an RFID receiver (244) configured to receive a signal from an RFID transmitter (228) of the agent (120) indicating that the agent (120) is in proximity to the vehicle (140); and a short-range wireless communications receiver configured to receive a signal from a short-range wireless communications transmitter of the agent (120) indicating that the agent (120) is in proximity to the vehicle (140).

11. The vehicle (140) of claim 10, wherein the sensor (144) is configured to determine a distance between the vehicle (140) and the agent (120) based on the signal.

12. The vehicle (140) of claim 11, wherein the distance is determined based on a signal strength of the signal.

13. The vehicle (140) of any of claims 8 to 12, wherein the vehicle (140) is an automated guided vehicle (140).

14. A server (160) comprising:
a communications interface configured to receive position information and proximity information from at least one vehicle (140) configured according to any one of claims 8 to 13; and
a processor configured to determine a position of an agent (120) based on the proximity information and the position information received from each vehicle (140) of the at least one vehicle (140).

15. A task-allocation device comprising:
a communications interface configured to communicate with a server (160) configured according to claim 14;
wherein the server (160) comprises a processor further configured to allocate a task to an agent (120) based on the determined position of the agent (120); and
an output device configured to instruct the agent (120) to perform the task.
